# EUROPÄISCHE PATENTSCHRIFT

(11) **EP 0 985 906 B1**
(45) Veröffentlichungstag und Bekanntmachung des Hinweises auf die Patenterteilung: **01.12.2004**
(21) Anmeldenummer: 99117704.9
(22) Anmeldetag: 08.09.1999
(51) Int. Cl.: G01C 21/20

(54) **Verfahren und Vorrichtung zur Bereitstellung von Informationsdaten im Zusammenhang mit einem GPS-System**
Method and device for providing information data in connection with a GPS system
Méthode et dispositif pour fournir des données d'information en relation avec un système GPS

(30) Priorität: 08.09.1998 DE 19841169
(43) Veröffentlichungstag der Anmeldung: 15.03.2000
(73) Patentinhaber: Peithmann, Ortwin, Dr.-Ing. Prof., 30655 Hannover (DE); Eberhard, Jost, Dipl.-Geogr., 53175 Bonn (DE)
(72) Erfinder: Peithmann, Ortwin, Prof. Dr.-Ing., 30655 Hannover (DE)
(74) Vertreter: Wahl, Hendrik, Dr.-Ing.

(56) Entgegenhaltungen:
- EP-A- 0 672 890
- DE-A- 3 925 831
- FR-A- 2 691 276
- FR-A- 2 755 284
- US-A- 5 717 392

## Beschreibung

Die vorliegende Erfindung betrifft ein Verfahren und eine Vorrichtung zur Bereitstellung von auf einem Datenträger abgelegten Informationsdaten unter Berücksichtigung von Ortsdaten, die aus einem GPS-Empfänger erhalten werden.

Das GPS - oder ausführlich Global-Positioning-System - wird weltweit dazu verwendet, die Standortkoordinaten eines Objekts an jedem beliebigen Ort der Erde festzustellen. GPS-Empfänger werten Sendeimpulse aus, die von geostationär angeordneten Satelliten abgegeben werden. Diese Signale mehrerer GPS-Satelliten werden von einem GPS-Empfänger empfangen und so ausgewertet, daß eine Bestimmung der Lage des Objekts auf Meter genau möglich ist.

Die GPS-Empfänger ermöglichten insbesondere in den letzten Jahren die Einführung und Verbreitung von Navigationssystemen, die es einem Autofahrer erlauben, Wegstreckeninformationen sehr detailliert zu erhalten. Hierfür gibt er vor Reiseantritt ein Reiseziel an, woraufhin ein Rechner des Navigationssystems basierend auf den in einem Datenträger abgelegten Informationen eine Reiseroute mit den kürzesten oder schnellsten Verkehrswegen erstellt und dem Nutzer optisch und in der Regel auch akustisch anzeigt.

Die US 5,717,392 zeigt eine geschwindigkeitsselektive Wiedergabe von Daten, basierend auf einem bestimmten Schwellwert der Geschwindigkeit, unterhalb dessen Daten überhaupt bzw. detailliert wiedergegeben werden. Die Wiedergabe erfolgt hier geschwindigkeitsgesteuert anhand eines Schwellwertes.

In einem Verfahren nach der EP-A 672 890 wird die Bewegungsgeschwindigkeit eines Fahrzeugs erfasst, um den Zeitpunkt der Wiedergabe eines Objekts zu steuern.

Es ist Aufgabe der Erfindung, ein GPS-gesteuertes System zu entwickeln, das es dem Nutzer des Systems gestattet, andere ortsbezogene Daten als Verkehrswegeinformationen in angepaßter Weise zu erhalten. Diese Aufgabe wird erfindungsgemäß durch ein Verfahren des Anspruchs 1 und eine Vorrichtung des Anspruchs 8 gelöst. Vorteilhafte Weiterbildungen der Erfindung sind Gegen-stand der zugeordneten Unteransprüche.

Erfindungsgemäß werden die interessierenden Informationsdaten wie z.B. historische, wirtschaftliche oder kulturelle Objektoder Gebietsbeschreibungen auf einen Datenträger abgelegt, der aufgrund der Speicherdichte und der Zugriffszeit vorzugsweise als optisches Speichermedium, insbesondere CD oder Minidisk oder DVD ausgebildet ist. Selbstvrständlich können diese Daten auch über einen Sender bezogen werden, der diese Daten z.B. im digitalen Rundfunk z.B. gegen Zahlung einer Gebühr bereithält (paymodus)

Der GPS-Empfänger der Erfindung liefert laufend aus den GPS-Daten die aktuellen Koordinaten des Benutzers, worauf aus den sukzessive erhaltenen Koordinaten Bewegungsdaten errechnet werden, nämlich Bewegungsgeschwindigkeitsdaten und optional auch Bewegungsrichtungsdaten. Aus diesen Daten erfolgt die Zuordnung des Benutzers zu einer Wegstrecke und zu seiner Position auf dieser Wegstrecke. Die auf dem Datenträger gespeicherten Daten werden nun in Abhängigkeit von der Auswertung der Bewegungsgeschwindigkeitsdaten, nämlich einer Bewegungsprognose wiedergegeben.

Die Wiedergabe der Informationsdaten an den Benutzer erfolgt dabei dynamisch in Abhängigkeit von seiner individuell gewählten Bewegungsgeschwindigkeit. Wenn die Bewegungsgeschwindigkeitsdaten einen sehr kleinen Wert haben (z.B. bei einem Fußgänger, Fahrradfahrer, langsame Fahrt, Verkehrsstau, Fußweg ältere Menschen oder bergauf), können die ortsbezogenen Informationsdaten sehr detailliert wiedergegeben werden, da der sich langsam fortbewegende Benutzer sehr viel Zeit hat, um von einem markanten Punkt zu einem anderen zu gelangen. Eine derartige Informationsfülle läßt sich bei zügiger Fortbewegung nicht mehr aufrechterhalten. Nunmehr werden nur noch Informationsdaten mit einer höheren Priorität bzw. geringeren Informationstiefe von dem Datenträger wiedergegeben. Die ortsbezogenen Informationsdaten werden somit mit zunehmender Geschwindigkeit weniger detailliert. Dies hat den Vorteil, daß die Informationsdaten dem Benutzer des Systems in völlig individueller Anpassung an seine persönliche Bewegungsgeschwindigkeit angeboten werden. Das dabei verfolgte Prinzip kann als "Was Du siehst, wird Dir erklärt" bezeichnen.

Durch die Bewegungsgeschwindigkeitsdaten wird somit ein Filter gesteuert, der in Abhängigkeit von dem Wert der Bewegungsgeschwindigkeitsdaten die Ortsinformationen entweder stärker oder weniger stark filtert bzw. gröber oder detaillierter wiedergibt. Die Feinheit dieses Filters, welche natürlich direkten Einfluß auf die Menge der wiedergegebenen Informationsdaten hat, kann zusätzlich zu dieser Steuerung auch direkt durch den Benutzer, z.B. mittels eines manuellen Wählschalters beeinflußt werden.

Das Verfahren läßt sich in einer Vorrichtung anwenden, bei der eine Steuerung des Informationswiedergabesystems mit einer Recheneinheit versehen ist, die aus den sukzessive erhaltenen Ortsdaten die Bewegungsgeschwindigkeitsdaten, z.B. in Form einer Prognose für die weitere Wegstrecke errechnet. Die auf dem Datenträger gespeicherten Informationen müssen dazu mit einem Zugriffsparameter verknüpft oder in einem zugriffsselektiven Datenbereich abgelegt sein, der diesen Daten eine gewisse Priorität im Hinblick auf die Bewegungsgeschwindigkeitsdaten verleiht, bzw. die Daten geschwindigkeitsselektiv zuordnet. Aus den Bewegungsgeschwindigkeitsdaten wird ein Zugriffssteuerungswert (Priorität) gebildet, der dazu dient, auf die Informationsdaten entsprechend den Zugriffsparametern oder dem zugriffsselektiven Datenbereich zuzugreifen. Hierfür müssen die Zugriffsparameter bzw. der zugriffsselektive Datenbereich dem aktuellen Zugriffssteuerungswert zugeordnet sein.

Einfach ausgedrückt bedeutet dies, daß die Daten auf dem Datenträger mit einer gewissen Priorität versehen werden. Hierdurch können bei höheren Geschwindigkeiten lediglich Informationsdaten mit einer höheren Priorität wiedergegeben werden, während bei abnehmender Geschwindigkeit auch Daten mit geringerer Priorität wiedergegeben werden. Die Menge an wiedergegebenen Informationen wird daher um so höher, je geringer die Fortbewegungsgeschwindigkeit des Benutzers ist.

Das erfindungsgemäße System kann selbstverständlich im Zusammenhang, insbesondere integriert mit einem Navigationssystem ausgebildet werden. In diesem Fall werden die Navigationsdaten mit höchster Priorität und die Informationsdaten mit niedrigerer Priorität wiedergegeben, was einfach dadurch möglich ist, daß eine gemeinsame Steuerung für die Wiedergabe der Navigations- als auch Informationsdaten vorgesehen ist.

Vorzugsweise ist die Steuerung derart ausgebildet, daß sie in Zusammenhang mit der Verwendung eines Navigationssystems die Länge der Pausen zwischen der Wiedergabe von akustischen Navigationsdaten im vorhinein bestimmt und eine Wiedergabe von Informationsdaten nur dann zuläßt, wenn die Informationsdaten zeitlich innerhalb der Pausen zwischen der Wiedergabe von Navigationsdaten wiedergegeben werden können. In diesem Fall müssen die auf dem Datenträger abgelegten Informationsdaten mit zugehörigen ebenfalls abgespeicherten Zeitwerten verknüpft oder verknüpfbar sein, die eine Aussage darüber enthalten, welche Zeit die Wiedergabe dieser Informationen beansprucht. Die Wiedergabe der Informationsdaten kann bei der Wiedergabe von Navigationsdaten jedoch auch einfach für die Dauer der Wiedergabe der Navigationsdaten unterbrochen oder überblendet werden.

Vorzugsweise können auf dem Datenträger oder auf mehreren Datenträgern unterschiedliche Arten von Informationsdaten, z.B. geschichtliche, kulturelle, politische, wirtschaftliche oder sportliche Daten abgespeichert sein. Dabei kann es sich sowohl um spezifisch erstellte Informationsdaten aber auch um historische Informationsdaten (Tonkonserven, Archivbilder) handeln. Es können unterschiedlichste Themen wie z.B. Malerei, Baukunst, Archäologie oder Informationen für Kinder und Jugendliche von einem Datenträger oder einem Auswahlmenue des Angebots eines Senders gewählt werden.

Ein derartiges System ermöglicht es dem Benutzer, das Land, das er bereist, hinsichtlich einer Vielzahl von unterschiedlichen Sichtweisen genauer kennenzulernen. Die Bedeutung des Systems dürfte besonders für Reisende im Ausland groß sein: Busreisen können mit Reisenden durchgeführt werden, die mehrsprachige Erläuterungen wünschen. Ausländer können individuell mit Informationen versorgt werden, unabhängig von der Teilnahme an Führungen oder individuell in ihrem Fahrzeug.

Relevante Informationsdaten könnten beispielsweise auch Mentalität, Sprache der Bevölkerung und sogar verkehrstechnische Daten wie zulässige Höchstgeschwindigkeiten, etc. darstellen. Es ist offensichtlich, daß die Möglichkeiten an Wissensvermittlung durch ein derartiges System sehr umfassend sind.

In einer vorteilhaften Weiterbildung der Erfindung weist der Datenträger auch einen Bereich für sonstige Informationsdaten mit geringer Priorität auf, die durch das System dann wiedergegeben werden können, wenn gerade keine Navigationsdaten oder Informationsdaten wiedergegeben werden und/oder wenn die Bewegungsgeschwindigkeitsdaten unterhalb eines gewissen Wertes liegen, z.B. das Fahrzeug sogar steht (Pause, Verkehrsstau, Flußüberfahrt mit einer Fähre).

Diese sonstige Informationsdaten können auch Werbedaten sein, die für Werbeträgern reserviert sind, die die Einführung derartiger Systeme finanziell unterstützen. Durch die prioritätsgesteuerte Wiedergabe der sonstigen Informationsdaten wird verhindert, daß die Wiedergabe von Navigationsdaten oder Informationsdaten unterbleibt oder unterbrochen wird. Zusätzlich kann durch die geschwindigkeitsabhängige Steuerung sichergestellt werden, daß die sonstigen Informationsdaten nicht zu einem Zeitpunkt wiedergegeben werden, wenn die Führung eines Kraftfahrzeugs z.B. bei hohen Geschwindigkeiten mit einem hohen Konzentrationsaufwand verbunden ist, oder wenn z.B. in der Stadt eine hohe Dichte von Navigationsinformationen wiedergegeben wird.

Generell kann auch eine Zeit(spannen)steuerung vorgesehen sein, die die Priorität der sonstigen Informationsdaten anhebt, wenn diese für einen längeren Zeitraum nicht abgespielt worden sind, sodaß einer Firma eine Garantie für das Abspielen ihrer Werbung innerhalb eines vertraglich vereinbarten Zeitintervalls gegeben werden kann.

Die auf dem Datenträger gespeicherten Informationsdaten werden über Zugriffsparameter oder zu zugriffsselektive Datenbereiche dem geschwindigkeitsabhängigen Zugriffssteuerungswert zugeordnet. Die Software entscheidet auch über die Priorität der Wiedergabe von Informationsdaten zu Objekten in der Landschaft, wenn diese gleichzeitig sichtbar sind. In diesen Fällen entscheidet die geschwindigkeitsabhängige Dauer der Sichtbarkeit in Verbindung mit der Dauer der Wiedergabe der Informationsdaten darüber, ob die Informationsdaten ausgegeben werden. So gibt es beispielsweise Informationsdaten, die einen größeren Sichtbereich betreffen. Dies kann z.B. eine Burgruine sein, die über eine Strecke von 3 km von der Straße aus sichtbar ist. Es kann sich jedoch auch um eine Information handeln, die nur von einem bestimmten Standpunkt aus sichtbar ist, z.B. ein Brunnen, der nur im Bereich der Einmündung einer Querstraße sichtbar ist. Hier ist es vorteilhaft, daß man die über einen längeren Zeitraum sichtbare Information nur dann wiedergibt, wenn nicht die Wiedergabe von nur kurzfristig sichtbaren Informationen notwendig ist. Eine derartige Information wird bei höheren Geschwindigkeiten unterdrückt, d.h. gar nicht wiedergegeben, da der korrespondierende Zugriffsparameter zu geringen Wert hat.

Die ortsspezifische Zuordnung der Informationsdaten umfaßt natürlich auch Informationen darüber, innerhalb welchen Zeitraums die Wiedergabe der Informationsdaten überhaupt sinnvoll ist, bzw. innerhalb welcher Streckenbereiche eine Information sichtbar ist. Wenn z.B. während des für die Wiedergabe der Informationsdaten wesentlichen Zeitraums gerade eine Navigationsmeldung wiedergegeben wird, und nach der Wiedergabe der Navigationsinformation das die Informationsdaten betreffende Objekt fast annähernd aus dem Sichtbereich gelangt ist, wird eine Wiedergabe der Informationsdaten unterdrückt. Außerdem kann im Fall einer Wiedergabekollision unterschiedlicher Daten immer die Wiedergabe derartiger Informationsdaten verschoben werden, die sich nicht auf einen definierten Punkt, sondern auf ein Gebiet oder eine Region beziehen und somit auch noch später wiedergegeben werden können.

Folgende Ausrüstung ist für ein tragbares GPS-System der Erfindung unablässig:

Ein Datenträgerlaufwerk, insbesondere CD- oder DVD-Laufwerk, wobei die Informationsdaten auf dem Datenträger vorzugsweise komprimiert sind, um eine möglichst große Informationsmenge abspeichern zu können. Weiterhin ist eine Steuerung erforderlich, die vorzugsweise in der Form eines angepaßten Mikroprozessors mit adaptierten Peripheriegeräten vorliegt. Weiterhin ist ein GPS-Empfänger erforderlich, der die Signale der GPS-Satelliten empfangen kann. Für die Handhabung des Geräts ist sowohl eine Eingabevorrichtung als auch eine Ausgabevorrichtung vorgesehen, die sowohl einen Lautsprecher oder Kopfhörer als auch ein Display umfassen kann. Als Stromquelle kann ein Netzanschluß, ein 12 V-Anschluß und/oder ein integrierter Akku vorgesehen sein, so daß das System auch zu Fuß oder auf dem Fahrrad mitgeführt werden kann.

Die Hardwareanforderungen übersteigen somit nicht diejenigen eines herkömmlichen Navigationssystems, wodurch sich dieses System auch problemlos als Zusatzadaption in an sich bekannte Navigationssysteme integrieren läßt.

Die Verbindung mit einem Navigationssystem, d.h. der Betrieb im Zusammenhang mit einer vorher festgelegten Reiseroute ist nicht erforderlich, da die Steuerung des erfindungsgemäßen Systems in einer vorteilhaften Weiterbildung der Erfindung durchaus in der Lage ist, aus Bewegungsgeschwindigkeitsdaten und Bewegungsrichtungsdaten, die aus der Verknüpfung von sukzessive empfangenen Koordinatendaten errechnet werden, einen prognostizierten Weg des Benutzers zu errechnen und dementsprechend die ortsbezogenen Informationsdaten wiederzugeben. Selbstverständlich wird die prognostizierte Reiseroute entsprechend den aktuellen Bewegungsdaten, d.h. Bewegungsgeschwindigkeitsdaten und Bewegungsrichtungsdaten ständig aktualisiert.

Wenn das erfindungsgemäße System in Verbindung mit einem Navigationssystem betrieben wird, kann die Prognose auch ohne Eingabe einer Reiseroute verbessert werden, da das System die Verkehrswegedaten des Navigationssystems nutzen kann, um die Prognose für den weiteren Reiseverlauf in Verbindung mit den Bewegungsrichtungsdaten und Bewegungsgeschwindigkeitsdaten sehr viel sicherer zu machen, da sich der Benutzer wahrscheinlich während seiner Fortbewegung auf einem im Navigationssystem gespeicherten Verkehrsweg befindet.

Um sicherzustellen, daß Informationsdaten, die für mehrere Strecken relevant sind, wie z.B. Regionsinformationen oder kulturelle und geschichtliche Hintergrundinformationen, nicht auf ein und derselben Fahrt wiederholt abgespielt werden, werden diese Informationen vorzugsweise in einem Speicher als wiedergegeben gekennzeichnet. Vor dem Abspielen derartiger Informationsdaten wird vorher dieser Speicher ausgelesen, um sicherzugehen, daß genau diese Informationsdaten nicht bereits vorher wiedergegeben worden sind.

Vorzugsweise kann der Benutzer des Systems durch einen manuellen Eingriff jederzeit auf den derzeitigen geschwindigkeitsabhängigen Zugriffswert, d.h. auf die Stärke der Filterung von Informationen, Einfluß nehmen und dadurch selber bestimmen, ob er mehr oder weniger Informationen wiedergegeben haben will. Selbstverständlich kann der Benutzer auch durch Vorsehen einer Stoppeinrichtung, wie z.B. einer Skiptaste, eine aktuell wiedergegebene Information jederzeit unterbrechen.

Die den unterschiedlichen Prioritätsstufen, d.h. Zugriffswerten zugeordneten Informationsdaten sind auf der CD derart aufgebaut, daß die wiedergegebenen Informationsdaten unabhängig von der aktuellen Geschwindigkeit immer schlüssig sind. Dies geschieht durch die Differenzierung der Informationen zu den Objekten in der Landschaft in mehreren Stufen der Informationstiefe. Dabei wird in der Anordnung der stufendiffernzierten (zugriffsselektiv untergliederten) Informationsdatenelemente deren curricularer inhaltlicher Zusammenhang derart berücksichtigt, daß Bezüge zwischen den einzelnen Informationsdatenelementen richtig wiedergegeben werden; d.h. auf vorher nicht wiedergegebene Inhalte wird spater nicht Bezug genommen, auf erwähnte Inhalte wird jedoch bei Bedarf Bezug genommen. Je nach der zur Verfügung stehenden Zeit zur Erläuterung von Objekten werden die dazu gespeicherten Gesamtinformationen in unterschiedlicher Abfolge dargeboten. Für den Reisenden entsteht somit der Eindruck, daß die Abfolge der wiedergegebenen Texte für ihn persönlich zu einem in sich sinnvollen Ablauf zusammengestellt wurde. Ermöglicht wird dieser Eindruck durch die erwähnte Zeitsteuerung, die die Wiedergabezeiten der Informationsdaten auf der Basis der aktuellen Geschwindigkeit, d.h. auf Basis des damit verknüpften Zugriffswertes errechnet bzw. prognostiziert und somit eine zeitlich sinnvolle Abfolge der Wiedergabe von Informationsdaten sicherstellt. So werden zu große Pausen durch eine selbsttätige Änderung des Zugriffssteuerungswertes mit Informationen geringerer Priorität gefüllt.

Zusammenfassend wird durch das erfindungsgemäße System das Informationsgebot individuell an die Geschwindigkeit und eventuelle manuelle Einstellungen des Benutzers angepaßt. Dies wird durch folgende Anpassungselemente sichergestellt:
- Geschwindigkeitsprognose, eventuell selbstlernend;
- zeitliche Steuerung der Wiedergabe im Rahmen sinnvoller Wiedergabezeitspannen;
- Stückelung der Informationsdaten in kleine Einheiten zur Optimierung der Anpassung zwischen Geschwindigkeit und Informationsangebot;
- Differenzierung der jeweils gültigen Streckeninformation nach Priorität (Zugriffswert);
- Curriculare Kohärenz, d.h. eine geschwindigkeitsspezifische Vertiefung bei Einzelthemen unter Wahrung des curricularen Zusammenhangs der Informationen, und
- Steuerung der Themenauswahl und der Informationstiefe durch direkte Beeinflussung durch den Benutzer, z.B. mit Hilfe von Wahlschaltern etc..

Vorzugsweise enthält die Steuerung eine selbstlernende Vorrichtung, z.B. in der Art eines neuronalen Netzes, das benutzerindividuelle Vorgaben und typische Bewegungscharakteristika eines Nutzers selbsttätig erkennt. Ein derartiges Netzwerk kann zum einen die Basiseinstellung des Systems selbsttätig vornehmen und zum anderen die Bewegung des Benutzers genauer prognostizieren.

Um nicht eine zu starke ständige Änderung der Prioritätsstufe bei stark wechselnden Geschwindigkeiten zu erhalten, kann die Steuerung eine Integrationseinrichtung aufweisen, die die aktuellen Bewegungsgeschwindigkeitswerte zur Errechnung des Zugriffssteuerungswertes über eine vorbestimmte Zeit integriert. Hierdurch kann man kurzfristige Geschwindigkeitsschwankungen unberücksichtigt lassen. Zudem kann die Änderung des Zugriffswertes auch von der zeitlichen Änderung des Bewegungsgeschwindigkeitswertes abhängig gemacht werden, so daß zu häufige Änderungen des Zugriffssteuerungswertes bei sich häufig ändernden Geschwindigkeiten, z.B. im Stadtverkehr, vermieden werden.

Werden die Daten von einem Sender übertragen, so kann der oben beschriebene Auswahlprozess durchaus auch in einer beim Sender angeordneten Steuerung ablaufen, die dann die GPS-Daten des Benutzers hierfür auswertet. Hierdurch wird dann die Menge der übertragenen Daten geringer, als wenn alle für den Auswahlpronotwendigen Daten übertragen werden müssen, und die Auswahl in einem Gerät stattfindet, das der Benutzer bei sich führt.

Der Aufbau eines erfindungsgemäßen Informationssystems soll nachfolgend anhand eines Ausführungsbeispiels in Zusammenhang mit der schematischen Zeichnung erläutert werden. In dieser zeigen:
- Fig. 1: einen schematischen Aufbau eines Informationssystems,
- Fig. 2: eine Zuordnung der auf einem Datenträger des Systems gespeicherten Informationsdaten (Info-units) in unterschiedliche Prioritätsstufen, und
- Fig. 3: den Aufbau einer Informationsdatei (Info-unit) in Abhängigkeit von der Informationstiefe am Beispiel des VW-Werkes.

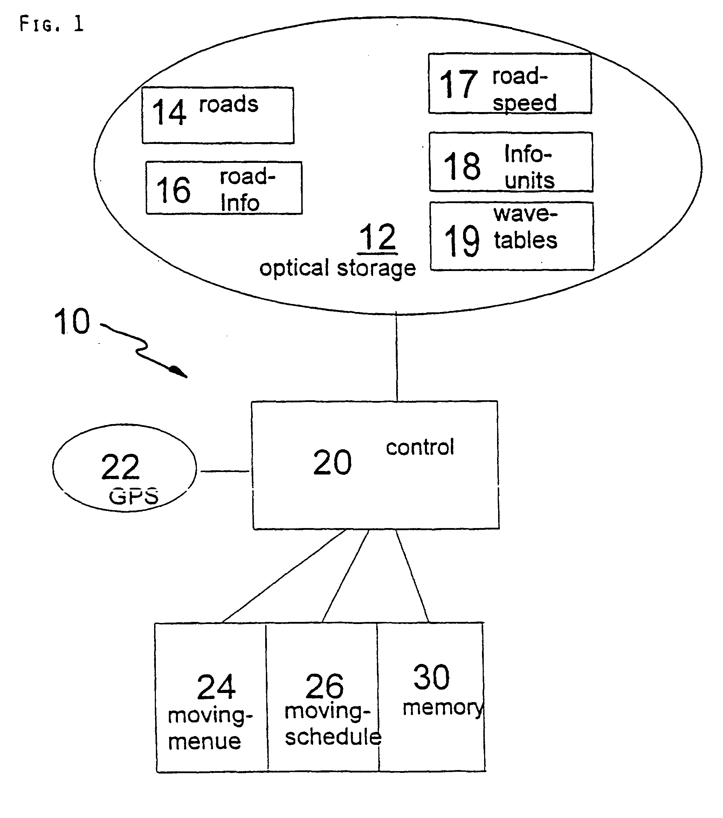

Fig. 1 zeigt ein Informationssystem 10, umfassend einen Datenträger 12 mit Streckeninformationen, nämlich Koordinaten zur Identifizierung der Strecke (roads) 14, mit objektbezogenen Streckensicht- bzw. -abspielinformationen (road-info) 16, streckenspezifischer Information über Normalgeschwindigkeiten (road-speed) 17 und den eigentlichen Steuerungsdaten (info-units) 18 für jeweils in sich (räumlich) geschlossene Blöcke von Informationsdateien, den Tondateien (wavetables) 19.

Es ist eine Steuerung 20 vorgesehen, die zum einen über einen Zugriff auf den Datenträger 12 mit den darauf befindlichen Daten 14,16,17, 18 und 19 verfügt als auch über den Zugriff auf die von einem GPS-Empfänger 22 erhaltenen Daten.

Die Steuerung 20 hat weiterhin Zugriff auf einen ersten Speicher (moving-menue) 24, in welchem sich alle Daten befinden, die für die Wiedergabesteuerung an dem aktuellen Ort notwendig sind.

Es ist darüberhinaus ein zweiter Speicher (moving-schedule) 26 vorgesehen. Dieser enthält für eine bestimmte Vorausstrecke dieprognostizierten Zeiten in kleinen Streckenabschnitten, z.B. bei PKW 100m, bei Fußgänge und Fahrradfahrern 10m. Ein dritter nichtflüchtiger Speicher (memory) 30 enthält Daten über bereits wiedergegebene Informationen bzw. Informationsthemen.

Das Zusammenwirken dieser Komponenten wird wie folgt beschrieben.
Die Steuerung 20 des Systems 10 System ruft beim Einschalten aus dem GPS-Empfänger solange Koordinaten ab, bis eine Koordinate gefunden wird, die auf dem Streckennetz liegt, für das Informationen vorliegen. Hierfür werden die Ortskoordinaten mit den Streckeninformationen (roads) 14 auf der CD bzw. DVD verglichen. Ist die Distanz zwischen Ortskoordinate und verfügbaren Strecken (roads 14) zu groß, wird gemeldet, daß keine Informationen vorliegen (falsche CD eingelegt oder keine Informationen verfügbar).

Liegt eine Übereinstimmung der aktuellen Ortskoordinaten mit verfügbaren Streckenbereichen (roads 14) vor, dann sammelt die Steuerung 20 solange Koordinaten über eine Strecke von bis zu 500 Metern (bei Fußgängern und Radfahrern bis zu 50 Metern) und bestimmt sodann die Strecke aufgrund der Koordinaten und der Fahrtrichtung . Die Strecken unterscheiden sich im Abruf der Informationen nach der Richtung, in der sie durchfahren werden. Dazu enthalten die Informationen road-info 16 entsprechende Gültigkeitsabschnitte. Jeder Strecke sind daher zwei richtungsspezifische Datenbereiche in den road-info Daten 16 zugeordnet.

Die Steuerung 20 des Systems 10 errechnet sodann aus dem Vergleich der aktuell festgestellten Geschwindigkeit (Koordinatenvergleich) mit der gespeicherten Normalgeschwindigkeit (road-speed 17) eine Prognose für die nächsten 10 Kilometer (bei Radfahrern und Fußgängern 1 km). Die Prognosedaten werden im moving-schedule Speicher 28 gespeichert und ständig fortgeführt. Das System 'lernt' dabei den Fahrstil/Bewegungsstil des Reisenden kennen und berücksichtigt Abweichungen zur Richtgeschwindigkeit bei den weiteren Prognosen. Stausituationen und Streckenhalte als extreme Abweichungen werden gesondert berücksichtigt. Die Bewegungsprognose ist noch bedeutender für die Nutzung des Systems durch Radfahrer und Fußgänger, weil hier aufgrund der körperbestimmten Geschwindigkeiten erhebliche individuelle Differenzen auftreten können ('alte Menschen werden am Berg langsam.'). Die road-speed Daten 17 auf dem Datenträger 12 sind deshalb ebenfalls richtungsspezifisch aufgebaut.

Das System wählt sodann unter Berücksichtigung der road-info-Daten 16 alle info-units 18 aus, die für die 10-Kilometer-Voraus-Distanz (bei Radfahrern und Fußgängern 1 km) relevant sind und stellt deren Kenndaten in das moving-menue 24 ein.

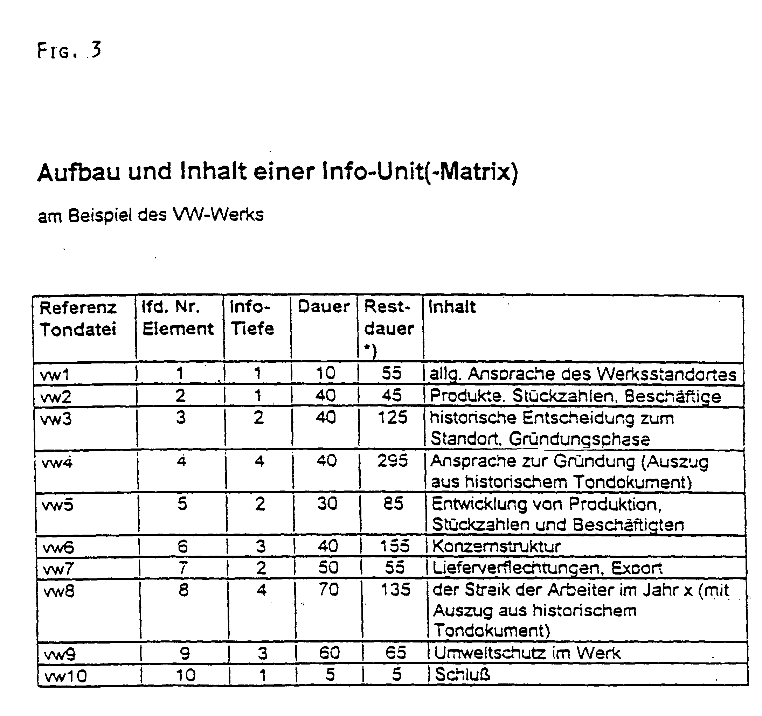

Die info-units 18 werden sodann in folgender Priorität abgespielt (siehe auch Fig. 3): die jeweils nächste ist diejenige, die bei höchster Priorität im Zeitfenster bis zum prognostizierten Endpunkt ihrer Gültigkeit für die Strecke abgespielt werden kann. Bei mehreren Informationen im Angebot erfolgt die Feinsteuerung durch die Differenzierung zwischen optimaler und möglicher Distanzangabe auf der Strecke. Je langsamer der Reisende sich fortgewegt, desto tiefer steigt das System im Informationsangebot hinab und liefert auch allgemeine Informationen über das Gebiet und über die Region (größere Informationstiefe = geringere Priorität). Sind gar keine Informationen mehr verfügbar, stoppt das System 10 die Ausgabe. (Im Auto wird zum Autoradio umgeschaltet).

Jenseits des Gültigkeitsabschnitts auf der Strecke werden info-units vom moving-menue 24 gelöscht. Alle 100 Meter (10 Meter bei Fußgängern und Radfahrern) werden ggf. weitere info-units 18 in das moving-menue 24 aufgenommen.

Zur weiteren Anpassung der Informationsmenge aus der laufenden info-unit heraus sind diese intern noch einmal nach Stufen der Informationstiefe untergliedert (depth-level), wie dies in Fig. 4 dargestellt ist. Diese Differenzierung ermöglicht es, die Informationen zu Objekten/Gebieten/Regionen intern curricular aufzubauen, d.h. zum selben Gegenstand eine in sich schlüssige und aufeinander aufbauende Erläuterung zu geben, die dennoch elastisch auf die Bewegungsgeschwindigkeit reagiert. Dies erfolgt über den Vergleich der kumulierten Restzeiten gleicher und geringerer Informationstiefe mit der für die info-unit 18 nach der Geschwindigkeitsprognose verbleibenden Restzeit. Für den Reisenden entsteht der Eindruck, daß die Textfolge für ihn persönlich in einem in sich sinnvollem Ablauf zusammengestellt wurde.

Parallel zur Bewegung des Reisenden werden die Geschwindigkeitsprognose und der Inhalt des moving-menue laufend aktualisiert. Auch der Koordinatenvergleich wird mit Hilfe der roads-Daten 14 permanent fortgesetzt. Bei Wechsel der Strecke erfolgt eine Neuorganisation des moving-menue 24 auf die diese neue Strecke.

Um sicherzustellen, daß sich Informationen, die für mehrere Strecken relevant sind (z.B. Regionsinformationen), nicht auf einundderselben Fahrt wiederholen, werden diese in dem memory 30 abgelegt; das moving-menue 24 wird anhand dieses memories 30 laufend überprüft.

Der Reisende kann darüberhinaus individuell in das Angebot an Informationen eingreifen:
- weniger Information:
   Durch Drücken einer Skip-Taste kann der Reisende die gerade laufende info-unit jederzeit verlassen. Das System spielt dann die Tondateien (wave-tables) 19 aus iener größeren Informationstiefe bzw. aus der nächsten info-unit 18 aus dem moving-menue 24 ein.
- mehr Information:
   Durch Drücken einer More-Taste kann der Reisende vertiefte Information zu der laufenden info-unit 18 anfordern. Das System senkt dann den depth-level in der info-unit (Fig. 3) auch dann, wenn auf dem moving-menue 24 zeitkritische Informationen höherer Priorität warten.

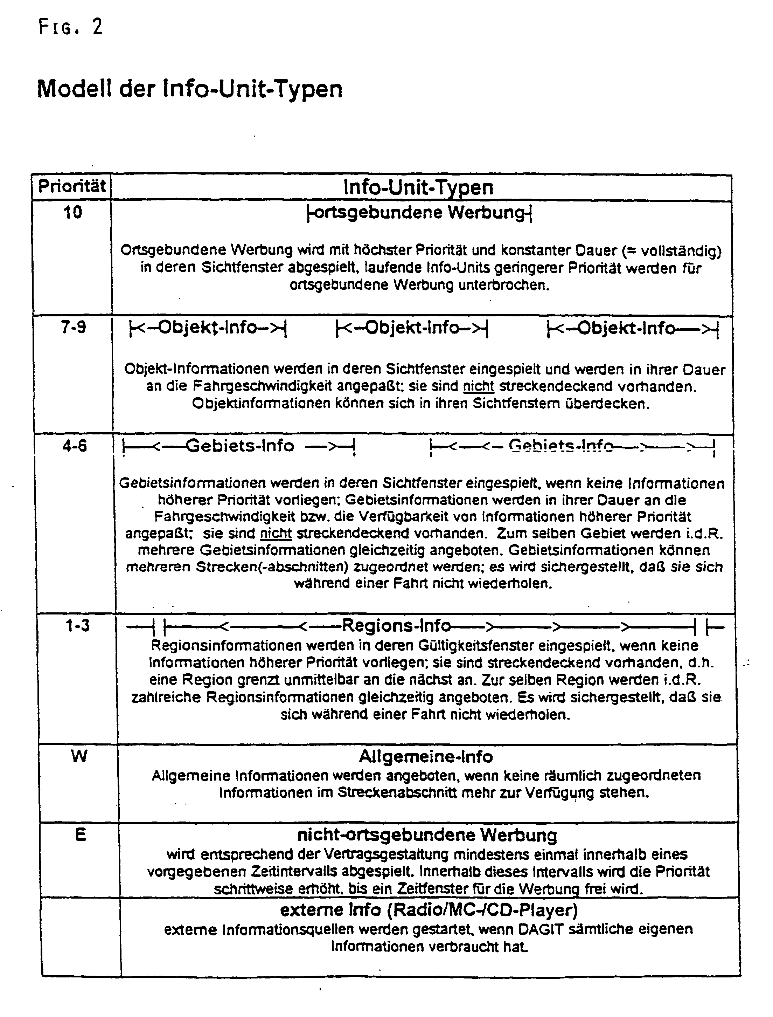

Fig. 2 zeigt sehr schematisch das logische Funktionskonzept des Systems. Aus dem GPS-Empfänger werden, gegebenenfalls unter Zuhilfenahme eines km-Zählers die Geschwindigkeit und die Richtung der Fortbewegung ermittelt. Die Steuerung umfaßt einen Selektionsbereich, der unter Berücksichtigung der erhaltenen Fortbewegungsdaten auf Tondokumente zugreift, die jeweils ein bestimmtes Objekt, z.B. eine Sehenswürdigkeit wie eine Burgruine betreffen.

Die road-info-matrices 16 enthalten einen Datenbereich betreffend die Gültigkeit der Daten, so daß die Wiedergabe überholter Daten unterbunden werden kann. Gleichzeitig kann hierüber eine jahreszeitlich oder vertraglich (z.B. Werbeverträge) bedingte Gültigkeit von Daten definiert werden, wodurch sichergestellt wird, daß Daten nicht zur falschen Jahreszeit (z.B. Eiswerbung im Winter, Hinweis auf ein Freibad im Winter etc.) oder nach Ablauf eines Vertrages abgespielt werden.

Fig. 2 beschreibt die Zuordnung der Informationsdaten zu unterschiedlichen Prioritäten für die Zugriffssteuerung. In diesem Beispiel wird ortsgebundener Werbung die höchste Priorität 10 zugeordnet, gefolgt von ortsbezogenen Objektdaten, welche die Priorität 7 bis 9 erhalten. Gebietsinformationen können über einen größeren Streckenbereich wiedergegeben werden, weshalb sie eine geringere Priorität 4 bis 6 erhalten. Dies trifft entsprechend auf Regionsinformationen zu, die z.B. ein bestimmtes Land oder einen Regierungsbezirk oder eine bestimmte Region z.B. Schwarzwald betreffen können (Priorität 1 bis 3). Wenn keine objekt-, gebiets-, oder regionsbezogenen Daten zur Verfügung stehen, können auch ortsunabhängige Informationen, z.B. Verkehrsregeln, umweltfreundlicher Fahrstil etc. wiedergegeben werden.

Die geringste Priorität erhalten sonstige Informationen, wie z.B. nicht ortsgebundene Werbung, deren Priorität allerdings zeitabhängig schrittweise erhöht wird, um ein Abspielen innerhalb einer gewissen Zeitspanne sicherzustellen, damit Werbeverträge erfüllt werden können.

Fig. 3 zeigt tabellarisch den strukturellen Aufbau einer info-unit 18 (Fig.1) gegliedert nach unterschiedlichen Informationstiefen, die wie die Priorität von Objektdaten (Fig.3) zur Steuerung der Wiedergabe in Abhängigkeit von der Bewegungsgeschwindigkeit dienen können. Gezeigt ist eine info-unit am Beispiel des VW-Werkes

In der Tabelle zeigen:
- die erste Spalte den Namen der Tondatei für die Audiowiedergabe,
- die zweite Spalte eine laufende Nummer der Information,
- die dritte Spalte die Informationstiefe,
- die vierte Spalte die Abspieldauer der zugehörigen Tondatei,
- die fünfte Spalte die Restdauer, als Summe der Abspieldauer dieser und der weiteren in der info-unit folgenden Tondateien gleicher und geringerer Informationstiefe, und
- die letzte Spalte den Inhalt der Information.

Für die Wiedergabe der Information bei relativ schneller Fortbewegung greift die Steuerung auf die info-unit mit der Informationstiefe 1 zu. Hierfür steht eine vergleichsweise kurze Zeit (hier 55 sek). zur Verfügung. Das Abspielen unterschiedlicher Informationen, die derselben Informationstiefe zugeordnet sind, erfolgt nach der laufenden Nummer. Der Informationstiefe 1 sind im vorliegenden Beispiel die laufenden Nummern 1, 2 und 10 zugeordnet. Als erstes wird somit Element 1 abgespielt, womit vor dem Abspielen des Elements 2 noch eine Restzeit von 45 sek. verbleibt. Nach dem Abspielen des Elements 2 wird Element 10 mit einer verbleibenden Restzeit von 5 sek. abgespielt.

Die Abfolge der Elemente gemäß Spalte 2 ist curricular logisch bzw. schlüssig gewählt. Beim Abspielen der Information mit einer größeren Informationstiefe, z.B. 3 wird zuerst das erste Informationselement dieser Informationstiefe und anschließend alle folgenden Informationselemente mit der gleichen oder einer geringeren Informationstiefe, hier z.B. 1 und 2 abgespielt. Die Abfolge der Informationselemente ist demnach so gewählt, daß sich unabhängig von der Informationstiefe immer eine curricular schlüssige Abfolge der Daten ergibt. Daher ist z.B. das Informationselement 10 "Schluß" logischerweise an letzer Stelle angeordnet, weil es unabhängig von der gewählten Informationstiefe immer am Schluß wiedergegeben wird.
Im Beispiel stehen für die Informationstiefe 2 125 sek. und für die Informationstiefe 3 155 sek. zur Verfügung. Bei der Wiedergabe der info-unit mit Informationstiefe 3 werden z.B. die Elemente 6,7,9 und 10 sukzessive wiedergegeben.

Die Elemente der info-unit können fahrtrichtungsspezifisch angeordnet sein, d.h. deren Einbindung in die Abfolge der Wiedergabe der Informationselemente kann abhängig von der Richtung, in der eine Wegstrecke durchfahren wird, gestaltet werden.

Bei der Wiedergabe ist die Audiowiedergabe im allgemeinen vorzuziehen, da sie eine Betrachtung der Objekte während der Wiedergabe zuläßt. Besonders geeignet ist das erfindungsgemäße System auch bei Bahn-, Bus-, Schiffsreisen und Bootsfahrten.

Ein Abspielen der Informationen zu einer Strecke nach Wahl ist auch möglich, ohne daß dabei eine reale Bewegung stattfindet. Dies soll die Wiedergabe der Informationsdaten auch mit jedem PC ohne GPS ermöglichen, z.B. zur Vorbereitung auf eine Reise anhand von Landkarten.

Die Erfindung umfaßt auch die Ergänzung um einen digitalen Kompaß als Eingabegerät. Der Kompaß ist Teil eines Zeigegerätes. Mit diesem kann der Benutzer an vorgegebenen Aussichtspunkten auf Objekte in der Landschaft zeigen (Berge, Wälder, Kirchen, Burgen u.a.) und erhält dann dazu spezifische Erläuterungen. Die Steuerung der Ausgabe dieser Informationen erfolgt in folgenden Schritten:
1. Das System meldet, daß ein Aussichtspunkt erreicht ist, an dem das Zeigegerät eingesetzt werden kann.
2. Der Benutzer richtet das Zeigegerät auf ein Objekt, zu dem er Informationen erwartet und betätigt einen Startknopf am Zeigegerät.
3. Das System liest die Himmelsrichtung aus, selektiert die zugehörige Informationseinheit und gibt die Informationen aus, solange der Benutzer am Standort ist und keine neue Himmelsrichtung eingibt. Ist keine Information für die gewählte Himmelsrichtung vorhanden, wird dies gemeldet.

## Patentansprüche

1. Verfahren zur Bereitstellung von auf einem Datenträger gespeicherten oder von einem Sender übertragenen und in einem Speicher abgelegten Informationsdaten unter Berücksichtigung von Ortsdaten, die über einen GPS-Empfänger erhalten werden, mit folgenden Schritten:
die Ortsdaten werden von dem GPS-Empfänger in zeitlichen Abständen abgerufen und zur Berechnung von Bewegungsdaten, zumindest von Bewegungsgeschwindigkeitsdaten verwendet,
die auf dem Datenträger bzw. im Speicher befindlichen Informationsdaten unterschiedlicher Priorität bzw. Informationstiefe werden in Abhängigkeit von den aktuellen Ortsdaten und den aktuellen Bewegungsgeschwindigkeitsdaten über eine akustische und/oder optische Ausgabeeinrichtung wiedergegeben,
wobei die auf dem Datenträger (12) gespeicherten Informationsdaten (18,19) entweder mit wenigstens einem Zugriffsparameter verknüpft und/oder in zugriffsselektiven Datenbereichen abgelegt werden, und aus den Bewegungsgeschwindigkeitsdaten ein Zugriffssteuerungswert errechnet und entsprechend nur auf Daten zugegriffen wird, deren Zugriffsparameter und/oder Datenbereich dem ermittelten Zugriffssteuerungswert zugeordnet ist.
**dadurch gekennzeichnet,**
**dass** als Zugriffsparameter die Wiedergabezeiten der Informationsdaten gespeichert werden, dass aus sukzessive erhaltenen Ortsdaten eine Bewegungsprognose für die weitere Wegstrecke errechnet wird,
**dass** als Zugriffssteuerungswert aus der Bewegungsprognose die Verweildauer im Sichtbereich von an der Wegstrecke gelegenen Informationsgegenständen ermittelt wird,
**dass** diese Bewegungsprognose aus dem Vergleich einer gespeicherten Erwartungsgeschwindigkeit für Streckenabschnitte mit der aktuell gemessenen Geschwindigkeit an den individuellen Bewegungsstil des Benutzers angepasst wird,
**dass** die Verweildauer mit der Wiedergabedauer der die Informationsgegenstände betreffenden Informationsdaten verglichen und in Abhängigkeit von dem Vergleichsergebnis entschieden wird, ob bzw. in welcher Informationstiefe die Informationsdaten wiedergegeben werden oder nicht.,
**dass** dazu mehrere Informationsdaten je Informationsgegenstand durch curriculare Verweise so miteinander verknüpft sind, dass sie in der an die Bewegungsprognose angepassten jeweils inhaltlich besten Folge wiedergegeben werden.

2. Verfahren nach Anspruch 1,
**dadurch gekennzeichnet,**
**daß** den in dem Datenträger befindlichen Informationsdaten unterschiedliche Prioritäten bzw. Informationstiefen zugeordnet werden,
und **daß** der Zugriff auf die und/oder die Wiedergabe der Informationsdaten prioritätsgesteuert erfolgt, wobei die Priorität bzw. Informationstiefe der wiedergegebenen Daten in Abhängigkeit von dem aktuellen Wert der Bewegungsgeschwindigkeitsdaten ausgewählt wird.

3. Verfahren nach Anspruch 2,
**dadurch gekennzeichnet,**
**daß** bereits wiedergegebene Themen zur Vermeidung von Wiederholungen gespeichert werden, und daß Informationen unabhängig von deren Priorität bzw. Informastionstiefe nur dann wiedergegeben werden, wenn sie entweder keinen Bezug zu anderen Themen oder nur einen Bezug zu bereits wiedergegebenen Themen aufweisen, so daß eine curriculare Kohärenz der wiedergegebenen Informationen sichergestellt wird.

4. Verfahren nach einem der vorhergehenden Ansprüche,
**dadurch gekennzeichnet,**
**daß** unter den Bewegungsdaten auch Bewegungsrichtungsdaten errechnet werden, und
**daß** der Streckenverlauf aus den Bewegungsgeschwindigkeitsdaten und Bewegungsrichtungsdaten, gegebenenfalls unter Berücksichtigung von in einem Datenträger abgelegten Verkehrswegedaten errechnet wird.

5. Verfahren nach einem der vorhergehenden Ansprüche,
**dadurch gekennzeichnet,**
**daß** auf einem Datenträger sonstige Daten, z.B. Werbedaten gespeichert sind, und daß die Wiedergabe der sonstigen Daten in Abhängigkeit von der wiedergabe der Informationsdaten und/oder in Abhängigkeit von den Bewegungsdaten gesteuert wird.

6. Verfahren nach einem der vorhergehenden Ansprüche,
**dadurch gekennzeichnet,**
**daß** das Verfahren zur Wiedergabe der Informationsdaten in Zusammenhang mit einem GPS-gestützten Navigationssystem unter Verwendung einer Steuerung angewandt wird, die einen Zugriff auf einen gespeicherten, eingegebenen und/oder errechneten Streckenverlauf hat,
**daß** die Pausen zwischen der Wiedergabe von Navigationsdaten seitens des Navigationssystems anhand der aktuellen Bewegungsgeschwindigkeitsdaten und/oder des vorgegebenen Streckenverlaufs errechnet/prognostiziert werden,
**daß** die auf dem Datenträger gespeicherten Informationsdaten mit einem Wert versehen sind, der eine Aussage über die erforderliche Wiedergabezeit enthält,
und **daß** die Steuerung die Wiedergabe der Informationsdaten nur dann veranlaßt, wenn zumindest für einen der Wiedergabe der Informationsdaten entsprechenden Zeitraum keine Wiedergabe von Navigationsdaten errechnet/prognostiziert ist.

7. Verfahren nach Anspruch 6,
**dadurch gekennzeichnet,**
**daß** die Steuerung die Wiedergabe der Informationsdaten nur dann veranlaßt, wenn das Verhältnis von Pausen zu Wiedergabezeiten insgesamt in einem vorbestimmten Bereich liegt.

8. Vorrichtung zur Wiedergabe von auf einem Datenträger (12) gespeicherten oder über einen Sender übertragenen Informationsdaten (19), umfassend
- eine Steuerung (20), die die Wiedergabe der Informationsdaten in Abhängigkeit von aus einem GPS-Empfänger (22) erhaltenen Ortsdaten veranlasst
- eine Recheneinheit zum Errechnen einer Bewegungsprognose aus sukzessiv erhaltenen Ortsdaten,
- einen Speicher für Informationsdaten zu Informationsgegenständen,
- einen Datenbereich für die Speicherung von den Informationsdaten der Informationsgegenstände zugeordneten Wiedergabezeiten als Zugriffsparameter für die Informationsdaten,
und eine Steuerung, die aus der Bewegungsprognose als Zugriffssteuerungswert die Verweildauer im Sichtbereich von Informationsgegenständen an der aus der Bewegungsprognose erhaltenen Wegstrecke errechnet und die Wiedergabe der Informationsdaten aufgrund eines Vergleichs der Verweilzeit mit der Wiedergabezeit steuert.

9. Vorrichtung nach Anspruch 8, die in ein Navigationssystem integriert oder mit einem Navigationssystem verbindbar ist,
wobei die Steuerung eine Schaltung umfaßt, die die Wiedergabe der Informationsdaten in Abhängigkeit von der Wiedergabe der Navigationsdaten zeitlich steuert.

10. Vorrichtung nach Anspruch 8 oder 9,
wobei den sonstigen Daten ein Zugriffsparameter niedriger Priorität zugeordnet ist, und
ein Zeitmeßbaustein vorgesehen ist, dessen Ausgangssignal einer Schaltung der Steuerung zuführbar ist, die die Priorität des den sonstigen Informationen zugeordneten Zugriffsparameters in Abhängigkeit vom Ausgangssignal des Zeitmeßbausteins erhöht, so daß die Wiedergabe in einem festgelegten Zeitintervall sichergestellt ist.

11. Vorrichtung nach einem der Ansprüche 8 bis 10,
wobei die Informationsdaten Streckengültigkeitsdaten umfassen, die Streckenabschnitte definieren - gegebenenfalls gestuft nach möglich und günstig - zu denen die Informationsdaten sinnvoll mitgeteilt werden können.

12. Vorrichtung nach Anspruch 11,
wobei die Steuerung eine Vorrichtung aufweist, die die Streckengültigkeitsdaten mit aktuellen Verkehrswegedaten und Bewegungsrichtungsdaten zur Generierung von aktuellen Lagedaten verknüpft und die Wiedergabe der Informationsdaten relativ zu den aktuellen Lagedaten veranlaßt.

13. Vorrichtung nach einem der Ansprüche 8 bis 12,
wobei ein Wiedergabezugriffsspeicher (memory 30)vorgesehen ist, in dem Zugriffsdaten zu nicht ortsbezogenen Informationsdaten oder einen größeren regionalen Bereich betreffende Informationsdaten, wie z.B. Regionsinformationen oder historische Informationen ablegbar sind, und
eine Markierungseinrichtung vorgesehen ist, die die im Wiedergabezugriffsspeicher (memory 30) abgelegten Zugriffsdaten nach erfolgter Wiedergabe markiert.

## Claims

1. A method for providing information data stored on a data carrier and communicated by a transmitter and held in a memory in taking into account location data received via a GPS receiver, comprising the following steps:
retrieving said location data from said GPS receiver in time intervals and using said location data for computing motion data, at least motion velocity data,
presenting said information data available on said data carrier or in said memory differing in priority and depth of information as a function of said actual location data and said actual motion velocity data by an audio and/or visual output means, thereby
linking said information data (18, 19) stored on said data carrier (12) either with at least one access parameter and/or depositing said information data in access selective data portions, and computing from said motion velocity data an access control value in accessing correspondingly only data whose access parameters and/or data portion is associated with said computed access control value,
**characterized by**
storing the presentation times of said information data as said access parameters,
computing from successively received location data a motion forecast for the further route,
obtaining as said access control value from said motion forecast the dwell time in the viewing range of information items located en route,
adapting said motion forecast from comparing a memorized anticipated velocity for route sections with the velocity as actually sensed to said individual motion style of the user,
comparing said dwell time to the presentation duration of said information data relating to said information items and deciding as a function of the result of comparison whether, or to what depth, said information data is to be presented or not,
interlinking a plurality of information data for each information item by curricular referencing so that said information data is presented in the sequence as best adapted in content in each case to said motion forecast.

2. The method as set forth in claim 1, **characterized in that** a differing priority and depth of information is assigned in each case to said information data held in said data carrier, and that access to and/or presentation of said information data is controlled by priority, said priority or depth of information of said presented data being selected as a function of said actual value of said motion velocity data.

3. The method as set forth in claim 2, **characterized in that** to prevent repetition, themes already having been presented are stored and information is presented irrespective of its priority or depth of information only when it has no relation to other themes oe only a relation to themes already having been presented so that a curricular coherence of said presented information is assured.

4. The method as set forth in any of the preceding claims, **characterized in that** included in said motion data also motion direction data are computed and said route is computed from said motion velocity data and motion direction data, where necessary in taking into account traffic route data held in a data carrier.

5. The method as set forth in any of the preceding claims, **characterized in that** other data, e.g. advertising data is stored on a data carrier and that presentation of the other data is controlled as a function of said presentation of information data and/or as a function of said motion data.

6. The method as set forth in any of the preceding claims, **characterized in that** said method is put to use for the presentation of information data in conjunction with a GPS-supported navigation system in making use of a controller having access to a stored, input and/or computed route, that the pauses between presentation of navigation data on the part of said navigation system are computed/forecasted by way of said actual motion velocity data and/or said defined route, that said information data stored on said data carrier is provided with a value containing an indication as to the necessary presentation time, and that said controller prompts presentation of said information data only when at least for a period of time corresponding to the presentation of said information data no presentation of navigation data is computed/forecasted.

7. The method as set forth in claim 6, **characterized in that** said controller prompts presentation of said information data only when the relation of said pauses to said presentation times lies in all in a predefined range.

8. A device for the presentation of information data (19) stored on a data carrier (12) or communicated by a transmitter, comprising
- a controller (20) prompting presentation of said information data as a function of location data contained in a GPS receiver (22),
- an arithmetic unit for computing a motion forecast from successively obtained location data,
- a memory for storing information item data,
- a data area for storing presentation times assigned to information data of said information items as parameters for accessing said information data, and
- a controller which computes said dwell time from said motion forecast as said access control value in the viewing range of information items on said route as obtained from said motion forecast and controls presentation of said information data on the basis of comparing said dwell time to said presentation time.

9. The device as set forth in claim 8 integrated in or connectable to a navigation system wherein said controller comprises a circuit which controls said presentation of information data as a function of the presentation of the navigation data in time.

10. The device as set forth in claim 8 or 9 wherein other data is assigned an access parameter of lower priority and a timing module is provided whose output signal can be applied to a circuit of said controller which elevates the priority of said access parameters assigned to other information as a function of said output signal of said timing module so that presentation is assured in a defined time interval.

11. The device as set forth in any of the claims 8 to 10 wherein said information data comprises route validity data which defines route sections - classified, where required, as to possibility and favorability - to which said information data may be informed, where appropriate.

12. The device as set forth in claim 11 wherein said controller comprises a device which links said route validity data to actual traffic route data and motion direction data for generating actual location data and prompts presentation of information data relating to said actual location data.

13. The device as set forth in any of the claims 8 to 12 wherein a presentation access memory (memory 30) is provided for memorizing access data to information data having no location relation or information data relating to a larger regional area, such as e.g. regional or historical information, and a means is provided for tagging said access data memorized in said presentation access memory (memory 30) after presentation thereof.

## Revendications

1. Procédé pour fournir des données d'information stockées sur un support de données ou transmises par un émetteur et mémorisées dans une mémoire en tenant compte des données de lieu, lesquelles sont obtenues par un récepteur GPS , avec les étapes suivantes:
les données de lieu sont récupérées du récepteur GPS à des intervalles temporels et utilisées pour calculer les données de déplacement, au moins des données de vitesse de déplacement,
les données d'information se trouvant dans le support de données, respectivement dans la mémoire d'une priorité ou profondeur d'information différentes, sont représentées en fonction des données de lieu actuelles et des données de vitesse de déplacement par un dispositif de sortie acoustique et/ou optique,
où les données d'information (18, 19) stockées sur le support de données (12) sont couplées soit avec au moins un paramètre d'accès et/ou sont mémorisées dans des zones de données accessibles en fonction du choix, et un calcul étant effectué à partir des données de vitesse de déplacement d'une valeur de commande d'accès et un accès étant permis uniquement pour des données dont le paramètre d'accès et / ou la zone de données sont associées à la valeur de commande d'accès déterminée;
**caractérisé en ce**
**que** l'on a stocké en tant que paramètre d'accès les temps de représentation des données d'information,
**que** l'on calcule à partir des données localisées de façon successive un pronostic de déplacement pour le trajet suivant,
**que** l'on détermine à partir du pronostic de déplacement en tant que valeur de commande d'accès la durée de séjour dans le champ visuel des objets d'informations situés près du trajet, que l'on adapte ce pronostic de déplacement au style de déplacement individuel de l'utilisateur au moyen de la comparaison d'une vitesse espérée stockée pour les tronçons de trajet avec la vitesse actuellement mesurée,
**que** l'on compare la durée de séjour avec la durée de représentation des données d'information concernant les objets d'information et que l'on décide en fonction du résultat de comparaison si oui ou non respectivement avec quelle profondeur d'information on représente les données d'information,
**que** l'on relie dans cette optique plusieurs données d'information par objet d'information grâce à des renvois curriculaires afin de représenter lesdites données selon une succession qui est le mieux adaptée au pronostic de déplacement.

2. Procédé selon la revendication 1, **caractérisé en ce**
**que** l'on associe différentes priorités ou profondeurs d'information aux données d'information se trouvant sur le support de données,
et **que** l'accès à et / ou à la représentation des données d'information est commandé selon la priorité ; la priorité respectivement la profondeur d'information des données représentées étant choisie en fonction de la valeur actuelle des données de vitesse de déplacement.

3. Procédé selon la revendication 2, **caractérisé en ce**
**que** l'on stocke des thèmes déjà représentés pour éviter des répétitions, et que l'on représente des informations indépendantes de leurs priorité respectivement de leur profondeur d'information que si celles-ci n'ont aucun rapport vis-à-vis à d'autres thèmes ou seulement un rapport avec des thèmes déjà représentés, afin d'assurer une cohérence curriculaire des informations représentées.

4. Procédé selon une des revendications précédentes, **caractérisé en ce**
**que** l'on calcule parmi les données de déplacement également des données concernant la direction de déplacement, et
**que** le trajet est calculé à partir des données de vitesse de déplacement et des données de direction de déplacement, éventuellement en tenant compte des données concernant les voies de communication stockées sur un support de données.

5. Procédé selon une des revendications précédentes, **caractérisé en ce**
**que** l'on stocke sur un support de données, d'autre données , par exemple, des données de publicité, et que la représentation des autres données est commandée en fonction de la représentation des données d'information et / ou en fonction des données de déplacement.

6. Procédé selon une des revendications précédentes, **caractérisé en ce**
**que** le procédé pour représenter les données d'information est appliqué par rapport à un système de navigation supporté par GPS en utilisant une commande qui a un accès à un trajet stocké, introduit et / ou calculé,
**que** les pauses entre la représentation des données de navigation de la part du système de navigation sont calculées / pronostiquées sur la base des données de vitesse de déplacement actuelles et / ou du trajet prédéterminé,
**que** les données d'information stockées sur le support de données sont pourvues d'une valeur qui contient une information sur le temps de représentation nécessaire,
**que** la commande génère uniquement la représentation des données d'information lorsqu'on n'a pas a calculé / pronostiqué pour au moins une durée de temps correspondant à la représentation des données d'information, une représentation de données de navigation.

7. Procédé selon la revendication 6, **caractérisé en ce**
**que** la commande ne provoque la représentation des données d'information que lorsque le rapport entre les pauses et les temps de représentation se situe en totalité dans une zone prédéterminée.

8. Dispositif pour représenter de données d'information (19) stockées sur un support de données (12) et transmises par un émetteur, comportant:
- une commande (20) qui provoque la représentation de données d'information en fonction de données localisées reçues à partir d'un récepteur GPS (22),
- une unité de calcul pour calculer le pronostic de déplacement à partir des données localisées reçues de façon successive,
- une mémoire pour les données d'information concernant les objets d'informations,
- une zone de données pour mémoriser les temps de représentations associés aux données d'information des objets d'information en tant que paramètres d'accès pour les données d'information,
- et une commande qui calcule à partir des pronostics de déplacement en tant que valeur de commande d'accès la durée de séjour dans le champ visuel d'objets d'information près du trajet obtenu à partir du pronostic de déplacement et qui commande la représentation des données d'information sur la base d'une comparaison du temps de séjour avec le temps de représentation.

9. Dispositif selon la revendication 8, qui est intégré dans un système de navigation ou qui peut être lié à un système de navigation,
où la commande comporte un circuit qui commande la représentation des données d'information en fonction de la représentation des données de navigation.

10. Dispositif selon la revendication 8 ou 9,
où les autres données sont associées à un paramètre d'accès d'une faible priorité, et
où on a prévu un élément de mesure de temps dont le signal de sortie peut être amené à un circuit de la commande qui augmente la priorité du paramètre d'accès associé aux autres informations en fonction du signal de sortie de l'élément de mesure de temps, afin d'assurer la représentation dans un intervalle de temps déterminé.

11. Dispositif selon une des revendications 8 à 10,
où les données d'information comportent des données de validité de trajet qui définissent des tronçons de trajet- éventuellement échelonnés selon possibilité ou avantage - pour lesquels tronçons on peut transmettre de façon sensée les données d'information.

12. Dispositif selon la revendication 11,
où la commande comporte un dispositif qui relie les données de validité de trajet avec les données concernant les voies de communication et les données d'orientation de trajet pour générer des données de position actuelles et qui provoque là représentation de données d'information par rapport aux données de position actuelles.

13. Dispositif selon une des revendications 8 à 12,
où on a prévu une mémoire d'accès de représentation (memory 30) dans laquelle on peut stocker des données d'accès pour des données d'information non relatives au lieu ou des données d'information concernant une zone régionale plus grande , comme par exemple des informations régionales ou des informations touristiques, et
où on a prévu un dispositif de marquage qui marque les données d'accès stockées dans la mémoire d'accès de représentation (memory 30) après une représentation effectuée.
